**Europäisches Patentamt**

**European Patent Office**

**Office européen des brevets**

(19)

(11) Veröffentlichungsnummer: **0 067 333**
**B1**

(12) **EUROPÄISCHE PATENTSCHRIFT**

(45) Veröffentlichungstag der Patentschrift:
**20.03.85**

(51) Int. Cl.⁴: **D 21 C 5/02**

(21) Anmeldenummer: **82104630.7**

(22) Anmeldetag: **27.05.82**

(54) **Verfahren zum Deinken von bedrucktem Altpapier.**

(30) Priorität: **12.06.81 DE 3123353**

(43) Veröffentlichungstag der Anmeldung:
**22.12.82 Patentblatt 82/51**

(45) Bekanntmachung des Hinweises auf die Patenterteilung:
**20.03.85 Patentblatt 85/12**

(84) Benannte Vertragsstaaten:
**AT BE CH FR GB IT LI LU NL SE**

(56) Entgegenhaltungen:
**EP - A - 0 013 758**
**DE - A - 1 922 038**
**DE - C - 396 071**
**DE - C - 415 062**

**Die Akte enthält technische Angaben, die nach dem Eingang der Anmeldung eingereicht wurden und die nicht in dieser Patentschrift enthalten sind.**

(73) Patentinhaber: **Akzo GmbH,**
**Postfach 10 01 49 Kasinostrasse 19-23,**
**D-5600 Wuppertal-1 (DE)**

(72) Erfinder: **Poppel, Günter, Dr. Dipl.-Chem., Im Pützbroich 17, D-5160 Düren (DE)**
Erfinder: **Ulubay, Hasan, Dr. Dipl.-Ing., Hinter dem Hof 11, D-5166 Kreuzau (DE)**

ACTORUM AG

**Beschreibung**

Die Erfindung betrifft ein Verfahren zum Deinken von bedrucktem Altpapier durch Behandeln des Altpapiers im Stofflöser bei alkalischen pH-Werten mittels Alkalisilikat, oxidativ wirkenden Bleichmitteln, Fettsäuren und/oder Harzsäuren mit mehr als 10 C-Atomen und Dispergiermitteln sowie Ausscheiden der abgelösten Druckfarbenteilchen aus der Faserstoffsuspension durch Flotation und/oder Waschen.

Unter Deinken versteht man die Entfernung von Druckfarben aus Altpapierfasersuspensionen. Die gereinigten Fasern werden zur Herstellung verschiedener Papierqualitäten, wie Druckpapier, Hygienepapier, Schreibpapier o. ä. erneut eingesetzt. Beim Ablauf der Deinking-Verfahren ist es wesentlich, dass bedruckte Altpapiersorten unter Zusatz von Chemikalien zerfasert werden, wobei sich die Druckfarben von den Fasern ablösen. Die abgelösten Druckfarben werden in nachgeschalteten Flotations- oder Waschprozessen aus der Fasersuspension entfernt. Sowohl bei dem Flotationsverfahren als auch bei dem Waschverfahren wird das Altpapier in alkalischem Milieu unter Zusatz von Natronlauge, Alkalisilikat, Wasserstoffperoxid sowie Sammler, Schäumer und Komplexbildner zerfasert und dann in der sogenannten Flotationszelle durch Ausflotieren der Druckfarben oder durch Auswaschen in einem Filter gereinigt und der Papierproduktion erneut zugeführt.

Der Alkalizusatz bewirkt eine gewisse Quellung der Cellulosefaser und hebt die Wasserstoffbrückenbindung auf, wodurch ein leichter Aufschluss des Altpapiers ermöglicht wird. Das Alkali verseift auch Fettsäuren, sofern diese als Sammler eingesetzt werden. Die Seifen bewirken eine Herabsetzung der Oberflächen- bzw. Grenzflächenspannung und lösen die Druckfarben ab. Zum Teil fällt Seife mit den Härtebildnern des Wassers als unlösliche Kalkseife aus und lagert sich an die Druckfarben an und hydrophobiert sie. Zur Verbesserung der Druckfarbenablösung und Dispergierung werden zusätzlich nichtionische Tenside der Klassen Fettalkoholpolyglycoläther bzw. Alkylphenolpolyglycoläther eingesetzt, die auch die Schaumentwicklung in der Flotationszelle unterstützen. Wasserstoffperoxid wird zur Verhinderung der alkalibedingten Faservergilbung eingesetzt. Andere Chemikalien wie Wasserglas und Komplexbildner stabilisieren die Bleichflotte. Dabei verhindern die Komplexbildner die schnelle Zersetzung des Wasserstoffperoxids durch Schwermetallionen wie Kupfer, Eisen, Mangan und ähnliche.

In der DE-A-2 093 150 wird beispielsweise folgende Chemikalienrezeptur bezogen auf das Altpapier angegeben:

|  |  |  |
|---|---|---|
| 2 - 5 | Gew.-% | Alkalisilikat (Wasserglas), |
| 0,5 - 3 | Gew.-% | Wasserstoffperoxid (100%ig), |
| 0,5 - 2 | Gew.-% | Natriumhydroxid (100%ig), |
| 0,3 - 2 | Gew.-% | Fettsäuren bzw. Salze, |
| 0,02 - 0,5 | Gew.-% | nichtionogene Dispergiermittel. |

Sofern Komplexbildner eingesetzt werden, fügt man diese in einer Menge von bis zu 0,4 Gew.-% in Form 40%iger Handelsware zu, die Stoffdichte im Pulper beträgt 4 - 7 Gew.-%, die Temperatur 20 bis 50°C. Je nach dem Bestimmungszweck des wiederaufzuarbeitenden Papiers kommen verschiedene Altpapierqualitäten zum Einsatz, wie beispielsweise Tageszeitungen, Illustrierte, NCR-Papiere, Etiketten und ähnliches. Für den späteren Einsatz als Hygienepapiere werden beispielsweise Tageszeitungen mit geringem Aschegehalt eingesetzt, während man für Druckpapiere eine Altpapiermischung von Tageszeitung und Illustrierte im Verhältnis 1 : 1 nimmt. Die Schwierigkeit der Entfernung der Druckfarben aus den Altpapieren hängt häufig vom Druckverfahren und von der Druckfarbenzusammensetzung ab.

Der Weissgrad einer Altpapiermischung aus unbedruckten Randstreifen von Tageszeitungen und Illustrierten im Verhältnis 1 : 1 beträgt im allgemeinen 61 - 63%. Beim Deinken von 1 : 1-Mischungen bedruckter Tageszeitungen und Illustrierten erzielt man bei dem Einsatz von Fettsäuren im allgemeinen einen Weissgrad von 58 - 60%. Die Zugabe der Fettsäuren erfolgt dabei in flüssiger Form unmittelbar vor dem Zerfasern des Altpapiers. Man benötigt eine Schmelzvorrichtung für die festen Fettsäuren, sofern man nicht flüssige Fettsäuren bevorzugt. Unter den milden Reaktionsbedingungen im Zerfaserer, verseifen die Fettsäuren sehr langsam wobei grobe Ausflockungen entstehen. Die an der Oberfläche der Ausflockungen gebildete Kalkseife erschwert eine weitere Verseifung der eingeschlossenen Fettsäuren und verhindert ihre Wirkung. Nichtverseifte Fettsäure zieht auf die Fasern auf und bewirkt durch deren Hydrophobierung höhere Faserverluste bei der Flotation.

Ähnliches beobachtet man auch beim Verfahren gemäss der DE-C-415 062, bei den in der Druckerschwärze enthaltenen unlöslichen Farbstoffe werden durch Auflösen des Bindemittels oder der Farbe des Farbstoffes durch eine Emulsion einer Fettsäure, z.B. Oleinsäure, in einer wässrigen Lösung eines fettsauren oder harzsauren alkalischen Salzes, das auch sulfonsauer sein kann, z.B. eines alkalischen Oleates, Sulfooleates, Sulforizinates, Resinates und Sulforesinates, blossgelegt.

Die so blossgelegten Farbstoffe werden endlich ausgeschieden, indem sie von einer mit Wasser nicht mischbaren Flüssigkeit aufgenommen werden, worauf diese Flüssigkeit mit den in ihr enthaltenen Farbstoffen durch eine geeignete Vorrichtung, z.B. mittels eines Zentrifugalfilters abgeschieden wird.

Aufgabe der vorliegenden Erfindung war es, die bekannten Deinkingverfahren so zu verbessern, dass die genannten Nachteile weitgehend vermieden werden.

Gelöst wurde die Aufgabe dadurch, dass die Fettsäuren und/oder Harzsäuren und die Dispergiermittel in Form einer Öl-in-Wasser-Emulsion eingesetzt werden. Bei der Zugabe der Emulsion in die alkalische Flotte tritt eine spontane Verseifung (Salzbildung) der Fettsäuren und/oder Harzsäuren ein. Die Alkaliseife bildet dann mit den Härtebildnern des Wassers je nach Emulgatorkonzentration und Härtegrad des Wassers eine mehr oder minder starke Ausfällung der Kalkseife in sehr feinen Flocken.

Diese feinen Flocken wirken als selektiver Sammler für die Druckfarben und verhindern erneute Ablagerung der Druckfarben auf die Papierfasern.

Voremulgierte Fettsäuren und/oder Harzsäuren können vor oder während der Zerfaserung des Altpapiers, auch bei hoher Stoffdichte eingesetzt werden. Hiermit werden auch Entwicklungen berücksichtigt, das Altpapier bei hoher Stoffdichte (15 - 20%) zu zerfasern (z.B. Stofflösetrommeln oder Helicopulper).

Ein weiterer Vorteil besteht darin, dass auch Fettsäuren mit hohem Schmelzpunkt oder Paraffine in dispergierter Form ohne anwendungstechnische Probleme als Deinkinghilfsmittel eingesetzt werden können.

Fettsäuren und/oder Harzsäuren bewirken in dispergierter Form, auch ohne Zusatz von nichtionogenen Dispergatoren, eine ausgezeichnete Druckfarbenablösung und einen selektiveren Druckfarbenaustrag in den Flotationszellen. Hierdurch werden höhere Weissgrade, niedrigere Faserverluste, und höhere Aschereduzierung erzielt.

Vorzugsweise beträgt die Konzentration der Öl-in-Wasser-Emulsion 20 - 50 Gew.-% Stoffanteil bezogen auf die Emulsion.

In Ausgestaltung der Erfindung wird das Verfahren so durchgeführt, dass das Altpapier im Stofflöser mit 1 - 5 Gew.-% Alkalisilikat, 0,5 - 2 Gew.-% Natriumhydroxid und/oder Natriumcarbonat, 0,5 - 3,0 Gew.-% oxidativ wirkende Bleichmittel und 0,2 - 1,5 Gew.-% Fettsäure und/oder Harzsäure in Form einer Öl-in-Wasser-Emulsion, bezogen auf das Altpapier, behandelt wird.

Zur Emulsionsherstellung werden vorzugsweise nichtionische und/oder anionische Dispergiermittel verwendet. Dabei werden, bezogen auf die Fett- und/oder Harzsäuren 1 - 35 Gew.-% nichtionische und/oder anionische Dispergiermittel eingesetzt. Werden anionische Dispergiermittel eingesetzt, so betragen diese vorzugsweise 1 - 10 Gew.-% bezogen auf die Fett- und/oder Harzsäure in der Emulsion. Als anionische Dispergiermittel haben sich insbesondere Alkali- und/oder Aminsalze der Fett- und/oder Harzsäuren und/oder Olefin-Sulfonate und/oder Fettalkoholsulfate und/oder Fettalkoholpolyglycoläthersulfate bewährt. Als nichtionische Dispergatoren haben sich Fettsäurepolyglycolester, Fettalkoholpolyglycoläther, Harzsäurepolyglycolester, Alkylphenolpolyglycoläther, äthoxylierte Fettsäuremono- und/oder -diglyceride im Rahmen der Erfindung bewährt. Fettsäurepolyglycolester und/oder Harzsäurepolyglycolester werden vorzugsweise mit 3 - 10 Mol Äthylenoxidanteil eingesetzt. Der Anteil an nichtionischen Dispergatoren beträgt vorzugsweise 5 - 25 Gew.-% bezogen auf die Fett- und/oder Harzsäure.

Die Erfindung wird anhand der nachfolgenden Beispiele näher erläutert.

*Beispiele*

*Vergleichsbeispiel 1:*

120 g einer Altpapiermischung bestehend aus:
 60 g Tageszeitungen und
 60 g Illustrierten
werden 5 min. bei 12% Stoffdichte und bei einer Temperatur von 20 und 50°C unter Zugabe der nachstehend genannten Chemikalien imprägniert und 5 min. bei 4% Stoffdichte zerfasert. Die Härte des Wassers betrug 12 °dH.

1,2 Gew.-% Natronlauge (100%ig)
1,0 Gew.-% Wasserstoffperoxid (100%ig)
4,0 Gew.-% Natronwasserglas 36-40 °Bé
0,2 Gew.-% Dissolvine D 40 (Na$_5$-DTPA)
0,8 Gew.-% Ölsäure

Die Quellzeit betrug 2 Stunden.
Nach 2minutiger Entstippung am Ultra-Turrax® wurde die Stoffsuspension dann mit Wasser von ca. 12 °dH auf 0,8% Stoffdichte verdünnt und in einer «Voith»-Laborflotationszelle 12 min. flotiert.

Von dem gesammelten Schaum wurden Menge, Trockensubstanz und Aschegehalt bestimmt. Die gereinigte Stoffsuspension wurde dann mit Schwefelsäure auf pH 5 abgesäuert. Von den Prüfblättern, die auf der «Rapid-Köthen»-Blattbildungsanlage hergestellt wurden, wurden am Elrepho®-Testgerät der Weissgrad bestimmt.

| Prozess-Temperatur | Weissgrad |
|---|---|
| 20°C | 58,5% |
| 50°C | 62,3% |

*Vergleichsbeispiel 2:*

Es wurde wie im Beispiel 1 verfahren, jedoch anstelle der Ölsäure 0,8 Gew.-% handelsübliche Deinking-Seife eingesetzt.

| Eingesetztes Produkt | Prozess-temperatur | Weissgrad |
|---|---|---|
| Seife | 20°C | 57,5% |
| Seife | 50°C | 61,9% |

*Beispiel 3*

Es wurde wie im Beispiel 1 verfahren, jedoch anstelle der Ölsäure, 0,8 Gew.-% an Trockensubstanz einer Ölsäureemulsion bezogen auf das Altpapier eingesetzt.

Die Ölsäureemulsion hatte die folgende Stoffzusammensetzung:

300 Teile Wasser
100 Teile Ölsäure
 20 Teile Ölsäurepolyglycoläther · 3 Äthylenoxid
  5 Teile Fettalkoholpolyglycoläther · 8 Äthylenoxid
  5 Teile Fettalkoholpolyglycoläthersulfat
  2 Teile Triäthanolamin

| Einsatzmenge | Prozess-temperatur | Weissgrad |
|---|---|---|
| 0,8% | 20°C | 61,7% |
| 0,8% | 50°C | 64,7% |

*Beispiel 4*

Es wurde wie im Beispiel 1 verfahren, jedoch anstelle der Ölsäure 0,8 Gew.-% an Trockensubstanz einer Fettsäure/Harzsäure-Emulsion eingesetzt.

Die Emulsion hatte die folgende Zusammensetzung:

300 Teile Wasser
100 Teile Tallöldestillat mit 20 - 25% Harzsäure
 20 Teile Ölsäurepolyglycoläther · 3 Äthylenoxid

5 Teile  Fettalkoholpolyglycoläther · 8 Äthylenoxid
5 Teile  Fettalkoholpolyglycoläthersulfat
2 Teile  Triäthanolamin

| Einsatzmenge | Prozess-temperatur | Weissgrad |
|---|---|---|
| 0,8% | 20°C | 61,5% |
| 0,8% | 50°C | 64,8% |

*Beispiel 5*

Es wurde wie im Beispiel 4 verfahren, jedoch enthielt die Emulsion ein Tallöldestillat mit 25 - 30%
Harzsäure. Andere Zusätze zur Emulsion wie im Beispiel 4.

| Prozesstemperatur | Weissgrad |
|---|---|
| 20°C | 61,5% |
| 50°C | 64,1% |

*Beispiel 6*

Es wurde wie im Beispiel 3 gearbeitet, die Ölsäureemulsion hatte jedoch folgende Stoffzusammensetzung:

250 Teile  Wasser
100 Teile  Ölsäure
5 Teile  Fettalkoholpolyglycoläthersulfat
2 Teile  Triäthanolamin

| Einsatzmenge | Prozess-temperatur | Weissgrad |
|---|---|---|
| 0,5% | 50°C | 61,2% |
| 1,0% | 50°C | 64,6% |

*Beispiel 7*

Es wurde wie im Beispiel 4 verfahren, die Fettsäure/Harzsäure-Emulsion hatte jedoch die folgende
Zusammensetzung:

250 Teile  Wasser
100 Teile  Tallöldestillat mit 20 - 25% Harzsäure
5 Teile  Fettalkoholpolyglycoläthersulfat
2 Teile  Triäthanolamin

| Einsatzmenge | Prozess-temperatur | Weissgrad |
|---|---|---|
| 0,8% | 20°C | 61,1% |
| 0,8% | 50°C | 64,3% |

*Beispiel 8*

Es wurde wie im Beispiel 5 verfahren, die Fettsäure/Harzsäure-Emulsion hatte jedoch die folgende
Zusammensetzung:

250 Teile  Wasser
100 Teile  Tallöldestillat mit 25 - 30% Harzsäure
5 Teile  Fettalkoholpolyglycoläthersulfat
2 Teile  Triäthanolamin

| Einsatzmenge | Prozess-temperatur | Weissgrad |
|---|---|---|
| 0,8% | 20°C | 60,7% |
| 0,8% | 50°C | 64,2% |

*Beispiel 9*

Es wurde wie im Beispiel 3 verfahren, jedoch mit
folgender Emulsionszusammensetzung:

300 Teile  Wasser
100 Teile  Mischfettsäure
20 Teile  Fettsäurepolyglycolester · 3 Äthylenoxid
5 Teile  Fettalkoholpolyglycoläther · 8 Äthylenoxid
5 Teile  Fettalkoholpolyglycoläthersulfat
2 Teile  Triäthanolamin

| Einsatzmenge | Prozess-temperatur | Weissgrad |
|---|---|---|
| 0,8% | 20°C | 61,2% |
| 0,8% | 50°C | 64,7% |

*Beispiel 10*

Es wurde wie im Beispiel 3 verfahren, jedoch mit
folgender Emulsionszusammensetzung:

280 Teile  Wasser
100 Teile  Ölsäure
10 Teile  Fettsäurepolyglycolester · 3 Äthylenoxid
2,5 Teile  Fettalkoholpolyglycolester · 8 Äthylenoxid
5 Teile  Fettalkoholpolyglycoläthersulfat
2 Teile  Triäthanolamin

| Einsatzmenge | Prozess-temperatur | Weissgrad |
|---|---|---|
| 0,8% | 20°C | 61,6% |
| 0,8% | 50°C | 64,4% |

*Beispiel 11*

Es wurde wie im Beispiel 3 verfahren, jedoch mit
folgender Emulsionszusammensetzung:

280 Teile  Wasser
100 Teile  Tallöldestillat mit 20 - 25% Harzsäure
10 Teile  Fettsäurepolyglycolester · 3 Äthylenoxid
2,5 Teile  Fettalkoholpolyglycolester · 7 Äthylenoxid
5 Teile  Fettalkoholpolyglycoläthersulfat
2 Teile  Triäthanolamin

| Einsatzmenge | Prozess-temperatur | Weissgrad |
|---|---|---|
| 0,8% | 20°C | 61,5% |
| 0,8% | 50°C | 63,5% |

*Beispiel 12*

Es wurde wie im Beispiel 3 verfahren, jedoch mit
folgender Emulsionszusammensetzung:

280 Teile  Wasser
100 Teile  Tallöldestillat mit 25 - 30% Harzsäure
10 Teile  Fettsäurepolyglycolester · 3 Äthylenoxid
2,5 Teile  Fettsäurepolyglycolester · 7 Äthylenoxid
5 Teile  Fettalkoholpolyglycoläthersulfat
2 Teile  Triäthanolamin

| Einsatzmenge | Prozess-temperatur | Weissgrad |
|---|---|---|
| 0,8% | 20°C | 61,3% |
| 0,8% | 50°C | 63,7% |

## Beispiel 13

Es wurde wie im Beispiel 3 verfahren, jedoch mit folgender Emulsionszusammensetzung:

280 Teile Wasser
100 Teile Mischfettsäure
 10 Teile Fettsäurepolyglycolester · 3 Äthylenoxid
2,5 Teile Fettsäurepolyglycolester · 7 Äthylenoxid
  5 Teile Fettalkoholpolyglycoläthersulfat
  2 Teile Triäthanolamin

| Einsatzmenge | Prozess-temperatur | Weissgrad |
|---|---|---|
| 0,8% | 20°C | 61,6% |
| 0,8% | 50°C | 64,0% |

Eine Gegenüberstellung der getesteten Formulierungen zeigt die deutlichen Vorteile der Emulsion hinsichtlich Weissgrad, Aschereduzierung und Faserverluste.

| Produkt | Einsatz-menge % | Temperatur °C | Gesamt-verluste % | Ascheanteil an Gesamtverlust % | Weissgrad % |
|---|---|---|---|---|---|
| Ölsäure | 0,8 | 50 | 20,3 | 28,3 | 62,3 |
| Seife | 0,8 | 50 | 18,5 | 26,2 | 61,9 |
| Emulsion | | | | | |
| Beispiel 3 | 0,8 | 50 | 16,2 | 28,5 | 64,7 |
| Beispiel 4 | 0,8 | 50 | 16,4 | 30,7 | 64,8 |
| Beispiel 5 | 0,8 | 50 | 14,4 | 31,9 | 64,1 |
| Beispiel 7 | 0,8 | 50 | 17,1 | 30,9 | 64,2 |
| Beispiel 8 | 0,8 | 50 | 17,8 | 30,9 | 64,2 |
| Beispiel 9 | 0,8 | 50 | 17,9 | 28,9 | 64,7 |
| Beispiel 10 | 0,8 | 50 | 14,0 | 32,7 | 64,4 |
| Beispiel 11 | 0,8 | 50 | 13,0 | 34,7 | 63,5 |
| Beispiel 12 | 0,8 | 50 | 13,4 | 33,7 | 63,7 |
| Beispiel 13 | 0,8 | 50 | 14,5 | 31,7 | 64,0 |

## Patentansprüche

1. Verfahren zum Deinken von bedrucktem Altpapier durch Behandeln des Altpapieres im Stofflöser bei alkalischen pH-Werten mittels Alkalisilikat, oxidativ wirkenden Bleichmitteln, Fettsäuren und/oder Harzsäuren mit mehr als 10 C-Atomen, und Dispergiermitteln und Ausscheiden der abgelösten Druckfarbenteilchen aus der Faserstoffsuspension durch Flotation und/oder Waschen, dadurch gekennzeichnet, dass die Fettsäuren und/oder Harzsäuren und die Dispergiermittel in Form einer Öl-in-Wasser-Emulsion eingesetzt werden.

2. Verfahren nach Anspruch 1, dadurch gekennzeichnet, dass die Konzentration der Öl-in-Wasser-Emulsion 20 - 50 Gew.-% Stoffanteil, bezogen auf die Emulsion beträgt.

3. Verfahren nach den Ansprüchen 1 - 2, dadurch gekennzeichnet, dass das Altpapier im Stofflöser mit 1 - 5 Gew.-% Alkalisilikat, 0,5 - 2 Gew.-% Natriumhydroxid und/oder Natriumcarbonat, 0,5 - 3,0 Gew.-% oxidativ wirkende Bleichmittel und 0,2 - 1,5 Gew.-% Fettsäure und/oder Harzsäure in Form einer Öl-in-Wasser-Emulsion, bezogen auf das Altpapier, behandelt wird.

4. Verfahren nach den Ansprüchen 1 - 3, dadurch gekennzeichnet, dass zur Emulsionsherstellung nichtionische und/oder anionische Dispergiermittel verwendet werden.

5. Verfahren nach den Ansprüchen 1 - 4, dadurch gekennzeichnet, dass 1 - 35 Gew.-% nichtionische und/oder anionische Dispergiermittel, bezogen auf die Fett- und/oder Harzsäuren zur Herstellung der Emulsion eingesetzt werden.

6. Verfahren nach den Ansprüchen 4 - 5, dadurch gekennzeichnet, dass das anionische Dispergiermittel ein Alkali- und/oder Aminsalz der Fett- und/oder Harzsäure und/oder Olefin-Sulfonat, und/oder Fettalkoholsulfat und/oder Fettalkoholpolyglycoläthersulfat ist.

7. Verfahren nach den Ansprüchen 5 - 6, dadurch gekennzeichnet, dass der Anteil des anionischen Dispergiermittels 1 - 10 Gew.-%, bezogen auf Fett- und/oder Harzsäure beträgt.

8. Verfahren nach den Ansprüchen 4 - 5, dadurch gekennzeichnet, dass als nichtionischer Dispergator Fettsäurepolyglycolester, Fettalkoholpolyglycoläther, Harzsäurepolyglycolester, Alkylphenolpolyglycoläther, äthoxylierte Fettsäuremono- und/oder -diglyceride eingesetzt werden.

9. Verfahren nach Anspruch 8, dadurch gekennzeichnet, dass die Fettsäurepolyglycolester und/oder Harzsäurepolyglycolester mit 3 bis 10 Mol Äthylenoxidanteil eingesetzt werden.

10. Verfahren nach den Ansprüchen 4 - 5, sowie 8 - 9, dadurch gekennzeichnet, dass der Anteil an nichtionischem Dispergator 5 - 25 Gew.-%, bezogen auf die Fett- und/oder Harzsäure beträgt.

## Claims

1. A process for deinking printed waste paper by treating the waste paper in a pulper at alkaline pH-values using alkali silicate, oxidizing bleaching agents, fatty acids and/or resinic acids containing more than 10 carbon atoms and dispersants and separating the detached particles of printing ink from the suspension of fibers by flotation and/or washing, characterized in that the fatty acids and/or resinic acids and the dispersants are used in the form of an oil-in-water emulsion.

2. A process as claimed in claim 1, characterized in that the concentration of the oil-in-water emulsion amounts to between 20 and 50% by weight of nonaqueous ingredients, based on the emulsion.

3. A process as claimed in claims 1 and 2, characterized in that the waste paper is treated in the pulper with from 1 to 5% by weight of alkali silicate, from 0.5 to 2% by weight of sodium hydroxide and/or sodium carbonate, from 0.5 to 3.0% by weight of oxidizing bleaching agents and from 0.2 to 1.5% by weight of fatty acid and/or resinic acid in the form of an oil-in-water emulsion, based on the waste paper.

4. A process as claimed in claims 1 to 3, characterized in that nonionic and/or anionic dispersants are used for preparing the emulsion.

5. A process as claimed in claims 1 to 4, characterized in that from 1 to 35% by weight of nonionic and/or anionic dispersants, based on the fatty and/or resinic acids, are used for preparing the emulsion.

6. A process as claimed in claims 4 and 5, characterized in that the anionic dispersant is an alkali and/or amine salt of the fatty and/or resinic acid and/or olefin sulfonate and/or fatty alcohol sulfate and/or fatty alcohol polyglycol ether sulfate.

7. A process as claimed in claims 5 and 6, characterized in that the proportion of anionic dispersant amounts to between 1 and 10% by weight, based on fatty and/or resinic acid.

8. A process as claimed in claims 4 and 5, characterized in that fatty acid polyglycol esters, fatty alcohol polyglycol ethers, resinic acid polyglycol esters, alkyl phenol polyglycol ethers, ethoxylated fatty acid mono- and/or diglycerides are used as the nonionic dispersant.

9. A process as claimed in claim 8, characterized in that the fatty alcohol polyglycol esters and/or resinic acid polyglycol esters are used with from 3 to 10 moles of ethylene oxide.

10. A process as claimed in claims 4 and 5 and 8 and 9, characterized in that the proportion of nonionic dispersant amounts to between 5 and 25% by weight, based on the fatty and/or resinic acid.

## Revendications

1. Procédé de désencrage de vieux papier imprimé par traitement de vieux papier au triturateur à pH alcalin au moyen de silicate alcalin, d'agents de blanchiment à effet oxydant, d'acide gras et/ou d'acides résiniques avec plus de 10 atomes de carbone, et d'agents dispersants ainsi que par séparation des particules d'encres enlevées par dissolution à la suspension de matière fibreuse par flottation et/ou lavage, caractérisé en ce que les acides gras et/ou les acides résiniques et les dispersants sont utilisés sous forme d'une émulsion huile dans l'eau.

2. Procédé selon la revendication 1, caractérisé en ce que la concentration de l'émulsion huile dans l'eau est de 20-50% en poids rapportée à l'émulsion.

3. Procédé selon les revendications 1 et 2, caractérisé en ce que le vieux papier est traité dans le triturateur avec 1 à 5% en poids de silicate alcalin, 0,5 - 2% en poids d'hydroxyde de sodium et/ou de carbonate de sodium, 0,5 - 3% en poids d'agent de blanchiment à effet oxydant et 0,2 - 1,5% en poids d'acide gras et/ou d'acide résinique sous forme d'une émulsion huile dans l'eau, rapportés au vieux papier.

4. Procédé selon les revendications 1 à 3, caractérisé en ce que pour préparer l'émulsion on utilise des dispersants non ioniques et/ou anioniques.

5. Procédé selon les revendications 1 à 4, caractérisé en ce que 1 à 35% en poids de dispersants non ioniques et/ou anioniques, rapportés aux acides gras et/ou résiniques, sont utilisés pour préparer l'émulsion.

6. Procédé selon les revendications 4 - 5, caractérisé en ce que le dispersant anionique est un sel alcalin et/ou d'amine d'acide gras et/ou résinique et/ou d'un oléfine-sulfonate, et/ou un sulfate d'alcool gras et/ou un sulfate d'éther de polyglycol et d'alcool gras.

7. Procédé selon les revendications 5 - 6, caractérisé en ce que la proportion de dispersant anionique est de 1 à 10% en poids, rapportée aux acides gras et/ou résiniques.

8. Procédé selon les revendications 4 - 5, caractérisé en ce qu'on utilise comme dispersant non ionique un ester de polyglycol et d'acide gras, un éther de polyglycol et d'alcool gras, un ester de polyglycol et d'acide résinique, un éther de polyglycol et d'alkylphénol, un mono- et/ou un diglycéride d'acide gras éthoxylé.

9. Procédé selon la revendication 8, caractérisé en ce que les esters de polyglycol et d'acide gras et/ou les esters de polyglycol et d'acide résinique avec de 3 à 10 moles d'oxyde d'éthylène sont utilisés.

10. Procédé selon les revendications 4 - 5, ainsi que 8 à 9, caractérisé en ce que la teneur en dispersant non ionique est de 5 - 25%, rapportée aux acides gras et/ou résiniques.